# EUROPÄISCHE PATENTANMELDUNG

(11) **EP 4 295 991 A1**
(43) Veröffentlichungstag der Anmeldung: **27.12.2023**
(21) Anmeldenummer: 23175019.1
(22) Anmeldetag: 24.05.2023
(51) Int. Cl.: B23P 11/02, F26B 21/00, F26B 25/06

(54) **VORRICHTUNG ZUM KÜHLEN UND/ODER TROCKNEN EINES SCHRUMPFFUTTERS UND VERFAHREN ZUM KÜHLEN UND/ODER TROCKNEN EINES WERKZEUGHALTERS, INSBESONDERE EINES SCHRUMPFFUTTERS**

(30) Priorität: 02.06.2022 DE 102022114046
(71) Anmelder: Haimer GmbH, 86568 Hollenbach-Igenhausen (DE)
(72) Erfinder: Haimer, Franz, 86568 Hollenbach-Igenhausen (DE)

(57) **Zusammenfassung**

Die Erfindung betrifft eine Vorrichtung zum Kühlen und/oder Trocknen eines Schrumpffutters und ein Verfahren zum Kühlen und/oder Trocknen eines Werkzeughalters, insbesondere eines Schrumpffutters, insbesondere mittels einer solchen Vorrichtung.

Die Vorrichtung (2) sieht eine mit seinem unteren Ende (8) über das Schrumpffutter (4) überstülpbaren Kühlaufsatz (6) vor.

Im Bereich des unteren Endes (8) des Kühlaufsatzes (6) sind Leitelemente (10), insbesondere Leitschaufeln (10), angeordnet, welche derart ausgebildet sind, dass eine erste Kühlfluidströmung (12) unter Erzeugung einer durch die Leitelemente (10) bewirkbaren Wirbelströmung (16) in ein das Schrumpffutter (6) aufnehmbares Inneres (18) des Kühlaufsatzes (6) leitbar ist.

Bei dem Verfahren wird der Werkzeughalter (4) durch eine erste Kühlfluidströmung (12) aus einem ersten Kühlfluid (14) gekühlt und/oder getrocknet, wobei die erste Kühlfluidströmung (12) in Form einer Wirbelströmung (16) axial in Richtung einer Werkzeugaufnahmeöffnung (74) des Werkzeughalters (4) entlang des Werkzeughalters (4) strömt.

## Beschreibung

Die Erfindung betrifft eine Vorrichtung zum Kühlen und/oder Trocknen eines Schrumpffutters und ein Verfahren zum Kühlen und/oder Trocknen eines Werkzeughalters, insbesondere eines Schrumpffutters, insbesondere mittels einer solchen Vorrichtung.

Aus der DE 10 2012 002 596 A1 ist eine Vorrichtung zum Kühlen und/oder Trocknen eines Schrumpffutters bekannt.

Die dort offenbarte Kühlvorrichtung enthält einen mit seinem unteren Ende über ein zu kühlendes Schrumpffutter überstülpbaren Kühlaufsatz. Der Kühlaufsatz sieht einen (inneren) Einsatz, in diesem Fall eine Innenhülse, vor, welcher nach oben gerichtete Eintrittsöffnungen für ein Kühlfluid bzw. eine Kühlfluidströmung eines Kühlfluids, beispielsweise hier Blasluft, in ein das Schrumpffutter aufnehmbares Inneres des Kühlaufsatzes aufweist.

Weiter sieht die Kühlvorrichtung eine Absaugeinrichtung vor - mit einem an der Oberseite des Kühlaufsatzes angeordneten Absaugrohr und einer Ansaugleitung, die mit mindestens einem Absaugaggregat verbunden ist.

Bei dieser Kühlvorrichtung wird der Kühlaufsatz bei Kühlung des Schrumpffutters nicht vollständig auf das Schrumpffutter aufgesetzt, wodurch auch weiteres Kühlfluid über einen Spalt zwischen dem unteren Ende des Kühlaufsatzes und dem Schrumpffutter in das Innere des Kühlaufsatzes eintreten kann.

Über die Absaugeinrichtung kann so innerhalb des Kühlaufsatzes eine nach oben gerichtete Kühlfluidströmung erzeugt werden, durch den das durch die nach oben gerichteten Eintrittsöffnungen in das Innere des Kühlaufsatzes eintretende Kühlfluid sowie das durch den Spalt in das Innere des Kühlaufsatzes eintretende weitere Kühlfluid nach oben abgesaugt werden können - und ein Abfließen eines Kühlfluids nach unten vermieden werden kann.

Die angesaugte Kühlfluidströmung streicht auf ihrem Weg im Inneren des Kühlaufsatzes nach oben über einen Spannbereich des Schrumpffutters und kühlt und/oder trocknet diesen ab.

Aus der DE 10 2017 118 643 A1 ist eine weitere und die aus der DE 10 2012 002 596 A1 bekannte Kühlvorrichtung weiterentwickelnde Vorrichtung zum Kühlen und/oder Trocknen eines Schrumpffutters bekannt.

Bei dieser Kühlvorrichtung sieht der Einsatz - neben den nach oben gerichteten Eintrittsöffnungen - auch nach unten gerichtete Eintrittsöffnungen für ein Kühlfluid bzw. eine Kühlfluidströmung eines Kühlfluids, beispielsweise hier flüssiges Kühlfluid, in das das Schrumpffutter aufnehmbare Innere des Kühlaufsatzes vor, welche - an dem Einsatz - oberhalb der nach oben gerichtete Eintrittsöffnungen angeordnet sind.

Ferner weist bei dieser Kühlvorrichtung der Kühlaufsatz ein äußeres Gehäuse und ein in dem äußeren Gehäuse angeordnetes inneres Gehäuse auf, wobei der Einsatz so dann in dem inneren Gehäuse angeordnet ist.

Zwischen dem äußeren Gehäuse und dem inneren Gehäuse ist eine Ringkammer ausgebildet, mittels welcher ein weiteres Kühlfluid bzw. eine Kühlfluidströmung eines weiteren Kühlfluid, beispielsweise hier Blasluft, an das untere Ende des Kühlaufsatzes leit- und dort umlenkbar ist, wo es von dort unmittelbar in das Innere des Kühlaufsatzes einströmen kann.

Bei dieser Kühlvorrichtung wird der Kühlaufsatz bei Kühlung und/oder Trocknung des Schrumpffutters vollständig mit seinem unteren Ende spaltfrei auf das Schrumpffutter aufgesetzt, wodurch kein anderes weiteres Kühlfluid (unkontrolliert) über den Spalt zwischen dem unteren Ende des Kühlaufsatzes und dem Schrumpffutter in das Innere des Kühlaufsatzes eintreten kann.

Über die Absaugeinrichtung kann so auch hier innerhalb des Kühlaufsatzes eine nach oben gerichtete Kühlfluidströmung erzeugt werden, durch den die durch die nach oben und die nach unten gerichteten Eintrittsöffnungen in das Innere des Kühlaufsatzes eintretenden Kühlfluide sowie das aus der Ringkammer am unteren Ende des Kühlaufsatzes unmittelbar in das Innere des Kühlaufsatzes eintretende weitere Kühlfluid nach oben abgesaugt werden.

Die angesaugte Kühlfluidströmung streicht auch hier auf ihrem Weg im Inneren des Kühlaufsatzes nach oben über einen Spannbereich des Schrumpffutters und kühlt und/oder trocknet diesen ab.

Es ist Aufgabe der Erfindung, die im Stand der Technik bekannten Kühlvorrichtungen zum Kühlen und/oder Trocknen eines Schrumpffutters zu verbessern, insbesondere deren Kühlleistung zu erhöhen.

Diese Aufgabe wird gelöst durch eine Vorrichtung zum Kühlen und/oder Trocknen eines Schrumpffutters und ein Verfahren zum Kühlen und/oder Trocknen eines Werkzeughalters, insbesondere eines Schrumpffutters, insbesondere mittels einer solchen Vorrichtung, mit den Merkmalen des jeweiligen unabhängigen Anspruchs.

Vorteilhafte Weiterbildungen der Erfindung sind Gegenstand abhängiger Ansprüche sowie der nachfolgenden Beschreibung und beziehend sich sowohl auf die erfindungsgemäße Vorrichtung wie auch auf das erfindungsgemäße Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Wird des Weiteren von einem Kühlen mittels eines Kühlfluids bzw. einer Kühlfluidströmung gesprochen, so ist - im Falle eines "trockenen" Kühlfluids, d.h. eines Fluids, welches keine Feucht- und/oder Flüssigkeitsanteile aufweist, immer auch ein Trocknen bewirkbar. Beispielsweise, dass "trockene" (Blas-)Luft Flüssigkeitsreste am Objekt abbläst.

Die Vorrichtung zum Kühlen und/oder Trocknen eines Schrumpffutters weist einen mit seinem unteren Ende über das Schrumpffutter überstülpbaren Kühlaufsatz auf.

Vereinfacht und anschaulich ausgedrückt, der Kühlaufsatz kann mit einer an seinem unteren Ende befindlichen Überstülpöffnung über das Schrumpffutter übergestülpt werden.

Die Vorrichtung sieht weiter im Bereich des unteren Endes des Kühlaufsatzes Leitelemente, insbesondere Leitschaufeln, vor, welche derart ausgebildet sind, dass eine erste Kühlfluidströmung (eines ersten Kühlfluids, beispielsweise eine (Blas-)Luft oder ein Wasser-Luftgemisch oder auch eine Kühlflüssigkeit) unter Erzeugung einer durch die Leitelemente bewirkbaren Wirbelströmung in ein das Schrumpffutter aufnehmbares Inneres des Kühlaufsatzes leitbar ist.

Zweckmäßig ist es insbesondere die Leitelemente bzw. Leitschaufeln, insbesondere gleichverteilt, umlaufend am unteren Ende des Kühlaufsatzes bzw. im Bereich der dortigen "Überstülpöffnung" anzuordnen.

Um die Wirbelströmung zu bewirken bzw. auszubilden ist es auch zweckmäßig, wenn die Leitelemente bzw. die Leitschaufeln gekrümmt, ähnlich wie Turbinenschaufeln, ausgebildet sind. Vereinfacht und anschaulich ausgedrückt, die Leitelemente bzw. die Leitschaufeln sind ähnlich einem Leitapparat bei einer Turbine. Die gekrümmte Form derartiger Leitelemente bzw. Leitschaufeln kann so eine bzw. die erste Kühlfluidströmung leiten bzw. ablenken - und so den Wirbel der Wirbelströmung entstehen lassen.

Der Erfindung liegt die Erkenntnis zugrunde, dass bei einem durch eine Wirbelströmung angeströmten zu kühlenden Schrumpffutter es aufgrund der (nicht laminaren) Wirbelströmung zu einer (erhöhten) Durchmischung von Kühlfluid kommt (, wodurch statische warme Kühlfluidschichten aufgelöst werden), was zu einer erhöhten Kühlleistung führt.

Darüber hinaus überstreicht ein in Wirbel um das zu kühlende Schrumpffutter herumströmendes Kühlfluid bzw. eine in Wirbel um das zu kühlende Schrumpffutter herumströmende Kühlfluidströmung eine größere Fläche an dem zu kühlenden Schrumpffutter, was auch zu einer erhöhten Kühlung (und/oder Trocknung) des Schrumpffutters beitragen kann.

Versuche haben gezeigt, dass - aufgrund der durch die Erfindung erreichbaren erhöhten Kühlleistung - bis zu 50% kürzere Kühlzeiten bei einem zu kühlenden Schrumpffutter erreicht werden können, als mit herkömmlichen Vorrichtungen ohne die erfindungsgemäß vorgesehene Wirbelströmung.

Bevorzugt kann auch vorgesehen sein, dass der Kühlaufsatz ein äußeres Gehäuse und ein in dem äußeren Gehäuse angeordnetes inneres Gehäuse aufweist, wobei zwischen dem äußeren Gehäuse und dem inneren Gehäuse eine Ringkammer, insbesondere eine nicht vollständig umlaufende Ringkammer, insbesondere für die erste Kühlfluidströmung, ausgebildet ist.

Eine solche Ringkammer kann insbesondere dazu zweckmäßig sein, um eine Kühlfluidströmung bzw. ein Kühlfluid "breitflächig" radial gleichmäßig zu verteilen.

Über diese Ringkammer im Kühlaufsatz kann so eine Kühlfluidströmung bzw. ein Kühlfluid, wie die erste Kühlfluidströmung bzw. das erste Kühlfluid, an das untere Ende des Kühlaufsatzes geleitet und dort über die Leitelemente bzw. Leitschaufeln umgelenkt werden, wo es von dort dann unmittelbar - unter Ausbildung der Wirbelströmung - in das Innere des Kühlaufsatzes einströmen kann.

Dazu kann es auch zweckmäßig sein, wenn die Leitelemente, insbesondere einstückig, an einem inneren Gehäuse des Kühlaufsatzes angeordnet bzw. angeformt sind, wodurch sich so strömungsleitende Strömungsbereiche/-räume zwischen den Leitelementen - und beiderseits gedeckelt durch das innere Gehäuse und das äußere Gehäuse bzw. ein mit dem äußeren Gehäuse verbundener, insbesondere verschraubter, (unterer) Deckel - ausbilden können.

Durchströmt eine Kühlfluidströmung bzw. ein Kühlfluid, wie die erste Kühlfluidströmung bzw. das erste Kühlfluid, so diese Strömungsbereiche/-räume (am unteren Ende des Kühlaufsatzes), wird sie bzw. es dort über die Leitelemente bzw. Leitschaufeln umgelenkt und strömt von dort unmittelbar - unter Ausbildung der Wirbelströmung - in das Innere des Kühlaufsatzes.

Weiterhin kann die Kühlvorrichtung eine Absaugeinrichtung aufweisen, insbesondere mit einem an einem oberen Ende des Kühlaufsatzes bzw. insbesondere zweckmäßiger Weise an dem inneren Gehäuse bzw. dessen oberen Ende angeordneten Absaugrohr und/oder Ansaugleitung. Das Ansaugrohr oder die Ansaugleitung kann dann mit mindestens einem Absaugaggregat verbunden sein.

Über die Absaugeinrichtung kann so innerhalb des Kühlaufsatzes eine nach oben gerichtete Kühlfluidströmung erzeugt werden, durch die in das Innere des Kühlaufsatzes eintretende Kühlfluide, wie insbesondere das - gegebenenfalls aus der vorsehbaren Ringkammer - über die Leitelemente am unteren Ende des Kühlaufsatzes - unter Ausbildung der Wirbelströmung - in das Innere des Kühlaufsatzes eintretende erste Kühlfluidströmung bzw. erste Kühlfluid, - auf einer spiralförmigen Bahn bzw. mit schraubenförmig wirbelnder Bewegung - nach oben abgesaugt werden können.

Zweckmäßig kann es weiter auch sein, insbesondere mit bzw. bei der Absaugeinrichtung, auch eine Trocknungs- und/oder Reinigungseinrichtung vorzusehen, mit welcher/-en gegebenenfalls abgesaugtes, feuchtes Kühlfluid getrocknet und/oder gereinigt werden kann.

Eine derartige Trocknungs- und/oder Reinigungseinrichtung ist Gegenstand der DE 10 2017 125 718 A1 , welche hiermit zum Bestandteil dieser Anmeldung gemacht wird.

Wird dann die abgesaugte, gegebenenfalls getrocknete und/oder gereinigte, Kühlfluidströmung bzw. Kühlfluid dem Kühlaufsatz bzw. der Ringkammer des Kühlaufsatzes und den Leitelementen des Kühlaufsatzes bzw. den Strömungsräumen zwischen den Leitelementen (wieder) zugeführt, kann sich so ein effizienter, geschlossener Kühlkreislauf ausbilden.

Weiterhin kann auch vorgesehen sein, dass der Kühlaufsatz einen inneren Einsatz, insbesondere einen in dem inneren Gehäuse angeordneten inneren Einsatz, aufweist.

Hier ist es dann besonderes zweckmäßig, wenn zwischen dem Einsatz und dem inneren Gehäuse ein erster Ringraum, insbesondere für eine zweite Kühlfluidströmung (aus einem zweiten Kühlfluid), und/oder zweiter Ringraum, insbesondere für eine dritte Kühlfluidströmung (aus einem dritten Kühlfluid), ausgebildet sind/ist.

Ein solcher Ringraum kann - wie auch die Ringklammer - insbesondere dazu zweckmäßig sein, um eine Kühlfluidströmung bzw. in Kühlfluid "breitflächig" radial gleichmäßig zu verteilen.

Auch ist es zweckmäßig, wenn ein solcher erster und/oder zweiter Ringraum darüber hinaus auch mittels Dichtungen nach "Außen" - und auch untereinander abgedichtet ist.

Weiterhin ist es vorteilhaft, wenn der Einsatz, insbesondere in seinem unteren Bereich, erste nach oben gerichtete Eintrittsöffnung/-en (für den Eintritt bzw. die Zuführung von einer Kühlfluidströmung bzw. von einem Kühlfluid in das Innere des Kühlaufsatzes) für eine zweite Kühlfluidströmung (aus einem bzw. dem zweiten Kühlfluid, beispielsweise ein Wasser-Luftgemisch oder auch (nur) (Blas-)Luft) und/oder, insbesondere in seinem oberen Bereich, zweite nach unten gerichtete Eintrittsöffnung/-en (für den Eintritt bzw. die Zuführung von einer Kühlfluidströmung bzw. von einem Kühlfluid in das Innere des Kühlaufsatzes) für eine dritte Kühlfluidströmung (aus einem bzw. dem dritten Kühlfluid, beispielsweise (Blas-)Luft, gegebenenfalls auch ein Wasser-Luftgemisch) aufweist.

So kann dadurch realisiert werden, dass das zweite Kühlfluid aus dem ersten Ringraum über diese ersten Eintrittsöffnungen in das Innere des Kühlaufsatzes eintritt bzw. dass das dritte Kühlfluid aus dem zweiten Ringraum über diese zweiten Eintrittsöffnungen in das Innere des Kühlaufsatzes eintritt.

Solche Eintrittsöffnungen können zweckmäßigerweise als Düsen ausgebildet sein.

Auch kann es zweckmäßig sein, ein Kühlfluid bzw. das zweite und/oder dritte Kühlfluid unter Druck durch die Eintrittsöffnung/-en in das Innere des Kühlaufsatzes eintreten zu lassen. Entsprechendes kann auch für das erste Kühlfluid der ersten Kühlfluidströmung vorgesehen werden.

Auch kann weiterbildend vorgesehen sein, dass im Bereich des unteren Endes des Kühlaufsatzes ein Dichtelement, insbesondere eine Dichtlippe und/oder ein Dichtlappen, zur dichtenden Anlage an dem Schrumpffutter angeordnet ist.

Ohne Dichtelement kann die Abdichtung auch durch spaltfreies Aufsetzen des Kühlaufsatzes mit seinem unteren Ende erreicht werden.

Wird der Kühlaufsatz - bei Kühlung des Schrumpffutters - insbesondere dann mittels des Dichtelements vollständig auf das Schrumpffutter aufgesetzt, wird ein sonst vorhandener Spalt zwischen dem unteren Ende des Kühlaufsatzes und dem Schrumpffutter abgedichtet - und es kann kein anderes weiteres Kühlfluid (unkontrolliert und mit damit verbundener hoher Geräuschentwicklung) über den Spalt zwischen dem unteren Ende des Kühlaufsatzes und dem Schrumpffutter in das Innere des Kühlaufsatzes eintreten.

Ferner kann auch vorgesehen sein, dass in einem inneren Gehäuse des Kühlaufsatzes eine oder mehrere Bohrungen angeordnet ist bzw. sind, welche insbesondere einen bzw. den ersten Ringraum mit einem bzw. dem Strömungsraum bzw. den Strömungsräumen im Bereich der Leitelemente, insbesondere zwischen den Leitelementen, fluidtechnisch verbinden. Insbesondere kann die eine bzw. können die mehreren Bohrungen in dem Kühlaufsatz im Allgemeinen dazu dienen, um eine fluidtechnische Verbindung - in einer Strömungsrichtung vor den Leitelementen - zu diesen bzw. dortigen Strömungsbereichen/-räumen herzustellen.

Auch kann der Kühlaufsatz eine oder mehrere Zuführungen aufweisen, durch welche ein Kühlfluid in einen bzw. den Strömungsräumen im Bereich der Leitelemente, insbesondere zwischen den Leitelementen und/oder in einer Strömungsrichtung vor den Leitelementen zuführbar ist.

Diese Bohrungen und/oder Zuführungen können insbesondere dazu in vorteilhafter Weise dienen, um verschiedene Kühlfluidströmungen - in flexibler Weise - über unterschiedliche Strömungswege in das Innere des Kühlaufsatzes eintreten zu lassen.

Auch ist es zweckmäßig, wenn an dem Kühlaufsatz ein oder mehrere Anschlagselemente angeordnet sind, welches bzw. welche an dem Schrumpffutter anschlagbar ist bzw. sind.

Mittels eines solchen Anschlagselement kann eine Überstülptiefe bei zu kühlenden Schrumpffutter eingestellt werden bzw. verhindert werden, dass - im Falle schmaler und/oder langer zu kühlender Schrumpffutter - der über ein solches Schrumpffutter übergestülpte Kühlaufsatz - mangels einer erreichbaren Auflage beispielsweise auf einem Bund des Schrumpffutters - unkontrolliert und/oder zu weit über das zu kühlende Schrumpffutter übergestülpt würde.

Weiterbildend kann auch vorgesehen sein, dass der Kühlaufsatz einen bzw. den, insbesondere in einem bzw. dem inneren Gehäuse des Kühlaufsatzes angeordneten, Einsatz aufweist, wobei der Einsatz um seine Längsachse drehbar bzw. rotierbar im Kühlaufsatz bzw. im inneren Gehäuse angeordnet ist.

Weist darüber hinaus auch der Einsatz, insbesondere in seinem unteren Bereich, erste bzw. die ersten nach oben gerichteten Eintrittsöffnungen für eine bzw. die zweite Kühlfluidströmung und/oder, insbesondere in seinem oberen Bereich, zweite bzw. die zweiten nach unten gerichteten Eintrittsöffnungen für eine bzw. die dritte Kühlfluidströmung auf, so kann dann durch einen solchen dreh- bzw. rotierbaren Einsatz auch die zweite und/oder dritte Kühlfluidströmung in eine Wirbelströmung versetzt werden.

Die Dreh- bzw. Rotierbarkeit des Einsatzes kann aktiv, beispielsweise mittels eines Antriebs, oder auch passiv, beispielsweise mittels Leitelemente, erreicht werden.

Ein gleicher Effekt von "wirbelnder" zweiten und/oder dritten Kühlfluidströmung bzw. zweiten und/oder dritten Kühlfluid kann auch erreicht werden, wenn diese von der Wirbelströmung der ersten Kühlfluidströmung - in entsprechender Bewegung - "mitgerissen" wird bzw. werden.

Ungeachtet des hier bezeichneten Schrumpffutters kann die Vorrichtung auch geeignet sein, um andere Arten von Werkzeughalter zu kühlen, wie beispielsweise Hydrodehnspannfutter, Spannzangen u.Ä., bestände hier unter gegebenen Umständen entsprechender Bedarf.

In bestimmten Fällen kann es auch ausreichend sein, auf die Kühlwirkung der Vorrichtung zu verzichten und nur die Trocknungswirkung zu nutzen. Dies kann beispielsweise dann der Fall sein, wenn ein Werkzeughalter nach Benutzung zwar nass, aber nicht heiß ist und vor dem Einlagern nur getrocknet werden soll.

Bei dem Verfahren zum Kühlen und/oder Trocknen eines Werkzeughalters, insbesondere eines Schrumpffutters, insbesondere mittels der erfindungsgemäßen Vorrichtung, wird der Werkzeughalter durch eine erste Kühlfluidströmung (aus einem ersten Kühlfluid) gekühlt und/oder getrocknet.

Dabei ist bei dem Verfahren vorgesehen, dass die erste Kühlfluidströmung in Form einer Wirbelströmung axial in Richtung einer Werkzeugaufnahmeöffnung des Werkzeughalters entlang des Werkzeughalters strömt.

Vereinfacht und anschaulich ausgedrückt, die erste Kühlfluidströmung bzw. das erste Kühlfluid, strömt auf einer spiralförmigen Bahn bzw. mit einer schraubenförmig wirbelnden Bewegung axial in Richtung einer Werkzeugaufnahmeöffnung des Werkzeughalters entlang des Werkzeughalters.

Der Erfindung liegt die Erkenntnis zugrunde, dass bei einem durch eine Wirbelströmung angeströmten zu kühlenden Schrumpffutter es aufgrund der (nicht laminaren) Wirbelströmung zu einer (erhöhten) Durchmischung von Kühlfluid kommt (, wodurch statische warme Kühlfluidschichten aufgelöst werden), was zu einer erhöhten Kühlleistung führt.

Darüber hinaus überstreicht ein in Wirbel um das zu kühlende Schrumpffutter herumströmendes Kühlfluid bzw. eine in Wirbel um das zu kühlende Schrumpffutter herumströmende Kühlfluidströmung eine größere Fläche an dem zu kühlenden Schrumpffutter. Es werden auch Bereiche erfasst, die sonst im "Windschatten" liegen würden, was auch zu einer erhöhten Kühlung (und/oder Trocknung) des Schrumpffutters beitragen kann.

Weiterbildend kann ferner vorgesehen sein, dass der Werkzeughalter durch eine zweite Kühlfluidströmung aus einem zweiten Kühlfluid gekühlt und/oder getrocknet wird, wobei der Werkzeughalter durch die zweite Kühlfluidströmung in Form einer axial in Richtung der Werkzeugaufnahmeöffnung des Werkzeughalters gerichteten bzw. (vereinfacht und anschaulich ausgedrückt) nach oben gerichteten Strömung angeblasen wird.

Auch kann die zweite Kühlfluidströmung - beispielsweise gegebenenfalls anstelle des Anblasens oder nach dem Anblasen axial entgegen der Richtung der Werkzeugaufnahmeöffnung des Werkzeughalters bzw. nach Unten - in Form einer bzw. der Wirbelströmung axial in Richtung der Werkzeugaufnahmeöffnung des Werkzeughalters bzw. (vereinfacht und anschaulich ausgedrückt) nach oben entlang des Werkzeughalters strömen.

Zweckmäßig erscheint es auch, wenn der Werkzeughalter durch eine dritte Kühlfluidströmung aus einem dritten Kühlfluid gekühlt und/oder getrocknet wird, wobei der Werkzeughalter durch die dritte Kühlfluidströmung in Form einer axial entgegen der Richtung der Werkzeugaufnahmeöffnung des Werkzeughalters gerichteten bzw. (vereinfacht und anschaulich ausgedrückt) nach unten gerichteten Strömung angeblasen wird.

Gegebenenfalls kann auch hier vorgesehen sein, dass - beispielsweise gegebenenfalls anstelle des Anblasens oder nach dem Anblasen axial entgegen der Richtung der Werkzeugaufnahmeöffnung des Werkzeughalters bzw. nach Unten - auch die dritte Kühlfluidströmung in Form einer bzw. der Wirbelströmung axial in Richtung der Werkzeugaufnahmeöffnung des Werkzeughalters bzw. (vereinfacht und anschaulich ausgedrückt) nach oben entlang des Werkzeughalters strömt.

Weiter kann auch vorgesehen sein, dass ein erstes, zweites und/oder drittes bzw. das erste, zweite und/oder dritte Kühlfluid einer bzw. der ersten, zweiten und/oder dritten Kühlfluidströmung (Blas-)Luft oder ein Gas, wie beispielsweise CO₂, oder ein Wasser-Luft-Gemisch, beispielsweise in Form eines (Kühl-)Nebels, oder ein Wasser-Gas-Gemisch oder ein Luft-Gas-Gemisch sind/ist, insbesondere, dass das erste Kühlfluid der ersten Kühlfluidströmung (Blas-)Luft, insbesondere - gegebenenfalls getrocknete - Luft, ist und/oder dass das zweite Kühlfluid der zweiten Kühlfluidströmung ein Wasser-Luft-Gemisch oder (Blas-)Luft ist und/oder dass das dritte Kühlfluid der dritten Kühlfluidströmung (Blas-)Luft ist.

Flüssigkeitsanteile aufweisende Kühlfluide, wie Wasser-LuftGemische, können die Kühlleistung erhöhen; "trockene" Kühlfluide, wie "reine" (Blas-)Luft, haben den Effekt, dass sie auch trocknen.

Gegebenenfalls kann ein bzw. das Kühlfluid bzw. können die Kühlfluide unter Druck stehen bzw. unter Druck eingeblasen werden, beispielsweise mit ca. 6 bar.

Ferner kann es auch zweckmäßig sein, wenn bei einem Fluidgemisch, wie dem Wasser-Luft-Gemisch, das Verhältnis der Bestandteile bzw. das Verhältnis von Wasser und Luft anpassbar ist, beispielsweise, dass - gesteuert - eine entsprechende Dosierung der Bestandteile bzw. von Wasser und Luft zu dem gewünschten Verhältnis vorgenommen wird. Zudem kann vorgesehen sein, die Tröpfchengröße des beigemischten Fluids, insbesondere des Wassers, einzustellen.

Weiterbildend kann auch vorgesehen sein, dass der Werkzeughalter in mehreren Phasen gekühlt und/oder getrocknet wird, insbesondere, dass in einer ersten Phase des Kühlens und/oder Trocknens des Werkzeughalters dieser mittels der ersten Kühlfluidströmung und einer bzw. der zweiten Kühlfluidströmung gekühlt wird und dass in einer zweiten Phase des Kühlens und/oder Trocknens des Werkzeughalters dieser zumindest mittels der ersten Kühlfluidströmung und einer bzw. der dritten Kühlfluidströmung gekühlt - und/oder getrocknet wird.

Hier kann weiter weiterbildend auch vorgesehen sein, dass in der zweiten Phase des Kühlens und/oder Trocknens des Werkzeughalters dieser auch mittels einer bzw. der zweiten Kühlfluidströmung gekühlt und/oder getrocknet wird.

Dieses Trocknen in der zweiten Phase des Kühlens des Werkzeughalters kann insbesondere dadurch realisiert sein, dass das entsprechende Kühlfluid - zumindest beim Trocknen in der zweiten Phase - keine Feucht- bzw. Flüssigkeitsanteile aufweist, beispielsweise "reine" (Blas-)Luft ist.

Verschiedene andere Kühl- und/oder Trockenregime können realisiert werden, beispielsweise durch mehr Kühl- und/oder Trockenphasen, wobei die verschiedenen Kühlfluidströmungen verschieden kombiniert und/oder mit verschiedenen Kühlfluiden durchgeführt werden.

Zweckmäßig kann auch sein, wenn die erste Kühlfluidströmung und eine bzw. die zweite Kühlfluidströmung vor Anströmung des Werkzeughalters gemischt und/oder zusammengeführt werden, wodurch auch die zweite Kühlfluidströmung den Werkzeughalter in einer Wirbelströmung anströmt.

Insbesondere zweckmäßig kann sich erweisen, wenn das zweite Kühlfluid der zweiten Kühlfluidströmung in der ersten Phase ein Wasser-Luftgemisch ist - und so dort eine hohe Kühlleistung realisiert - und/oder wenn das zweite Kühlfluid der zweiten Kühlfluidströmung in der zweiten Phase (Blas-)Luft ist - und so dort Trockeneffizienz entfaltet.

Auch kann weiterbildend vorgesehen sein, dass zumindest eine von den Kühlfluidströmungen dem Werkzeughalter unter Druck, beispielsweise 6 bar, zugeführt wird, insbesondere, dass eine bzw. die zweite Kühlfluidströmung zumindest im Falle eines Wasser-Luft-Gemisches dem Werkzeughalter unter Druck zugeführt wird.

Zweckmäßig erscheint es auch, wenn die den Werkzeughalter (an- und umströmende) erste Kühlfluidströmung abgesaugt wird bzw. die, insbesondere alle, den Werkzeughalter anströmenden Fluidströmungen abgesaugt werden, insbesondere mittels eines Absaugaggregats bzw. einer bzw. der Absaugeinrichtung.

Hier weiterbildend erscheint es auch von Vorteil, wenn die abgesaugte erste Kühlfluidströmung bzw. die abgesaugten Kühlfluidströmungen auch getrocknet und/oder gereinigt wird bzw. werden und die getrocknete und/oder gereinigte Kühlfluidströmung bzw. -en dem Kühlungsprozess (und/oder einem zusätzlichen Trocknungsprozess) des Werkzeughalters wieder zugeführt wird bzw. werden, insbesondere als die erste "wirbelnde" Kühlfluidströmung.

Eine derartige Trocknung und/oder Reinigung ist Gegenstand der DE 10 2017 125 718 A1, welche hiermit zum Bestandteil dieser Anmeldung gemacht wird.

Auch kann vorgesehen sein, dass auch eine bzw. die zweite Kühlfluidströmung und/oder eine bzw. die dritte Kühlfluidströmung in eine Wirbelströmung versetzt werden bzw. wird, beispielsweise durch einen drehbaren bzw. rotierbaren Einsatz in einem über den Werkzeughalter überstülpbaren Kühlaufsatz - oder beispielsweise alleine dadurch, dass sie von der Wirbelströmung der ersten Kühlfluidströmung - in entsprechender dann aufnehmender Bewegung - "mitgerissen" wird bzw. werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen - auch zwischen den Anordnungen/Vorrichtungen und Verfahren - zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine schematische Darstellung einer Vorrichtung zur Kühlung und/oder Trocknung eines Schrumpffutters in einer zum Teil geschnittenen Seitenansicht;
- FIG 2: eine Darstellung eines Kühlaufsatzes der Vorrichtung zur Kühlung und/oder Trocknung eines Schrumpffutters aus FIG 1 in einer Schnittdarstellung, welche eine erste Phase eines Kühlprozesses eines in dem Kühlaufsatz aufgenommenen Schrumpffutters verdeutlicht, - gemäß einer ersten Ausführung;
- FIG 3: eine Darstellung des Kühlaufsatzes der Vorrichtung zur Kühlung und/oder Trocknung eines Schrumpffutters aus FIG 1 in einer Schnittdarstellung, welche eine zweite Phase eines Kühl- und Trockenprozesses des in dem Kühlaufsatz aufgenommenen Schrumpffutters verdeutlicht, - gemäß der ersten Ausführung;
- FIG 4: eine Darstellung eines Kühlaufsatzes der Vorrichtung zur Kühlung und/oder Trocknung eines Schrumpffutters aus FIG 1 in einer Schnittdarstellung, welche eine erste Phase eines Kühlprozesses eines in dem Kühlaufsatz aufgenommenen Schrumpffutters verdeutlicht, - gemäß einer zweiten Ausführung;
- FIG 5: eine Darstellung des Kühlaufsatzes der Vorrichtung zur Kühlung und/oder Trocknung eines Schrumpffutters aus FIG 1 in einer Schnittdarstellung, welche eine zweite Phase eines Kühl- und Trockenprozesses des in dem Kühlaufsatz aufgenommenen Schrumpffutters verdeutlicht, - gemäß der zweiten Ausführung;
- FIG 6: eine Ansicht auf eine Wirbelströmung erzeugende Leitelemente eines Kühlaufsatzes der Vorrichtung zur Kühlung und/oder Trocknung eines Schrumpffutters aus FIG 1.

FIGen 1 bis 6 zeigen jeweils eine Vorrichtung 2 zur Kühlung und/oder Trocknung eines Schrumpffutters 4 bzw. wesentliche Teile davon, wobei insbesondere die FIGen 2 bis 5 auch prozessuale Aspekte der Vorrichtung 2 (beim Kühlen und/oder Trocknen eines Schrumpffutters) - in zwei Ausführungen - mitverdeutlichen.

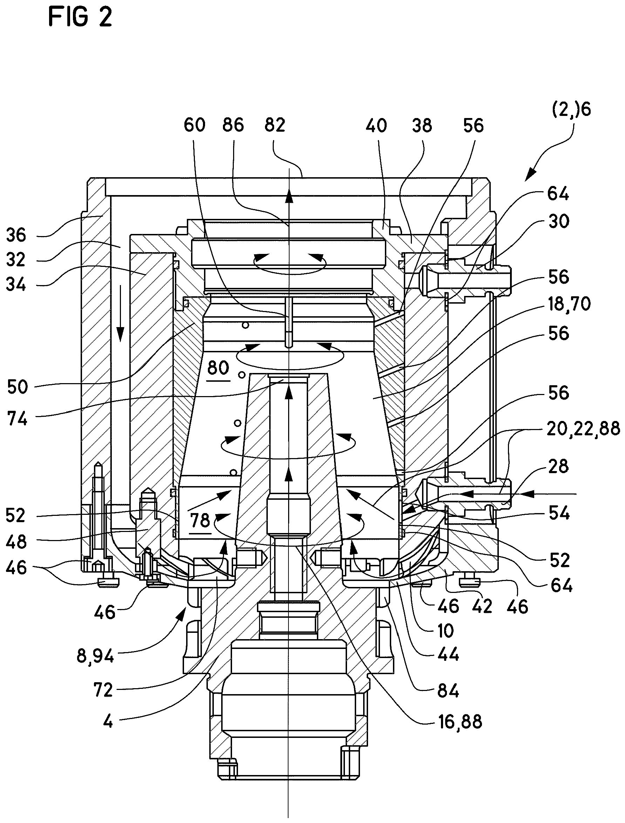

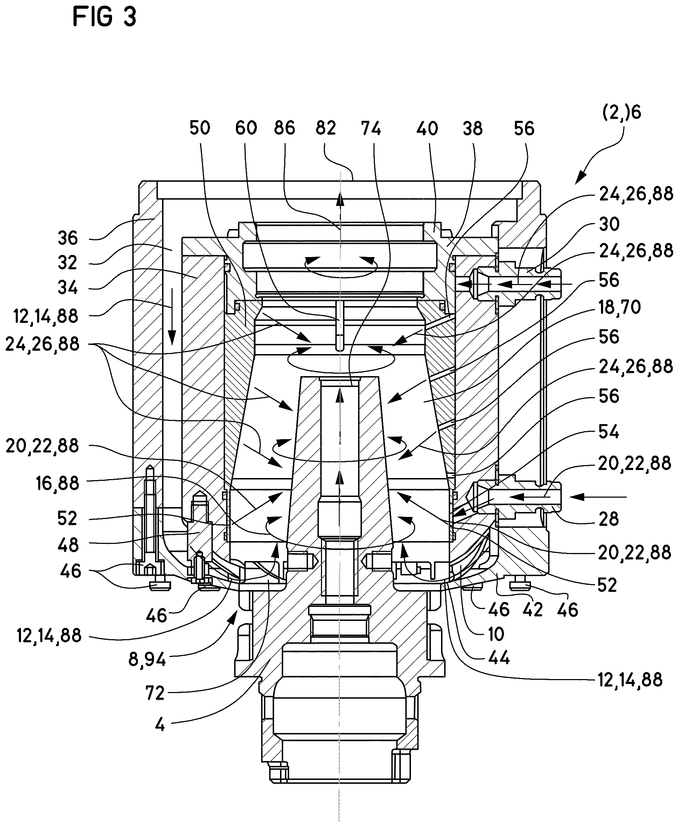

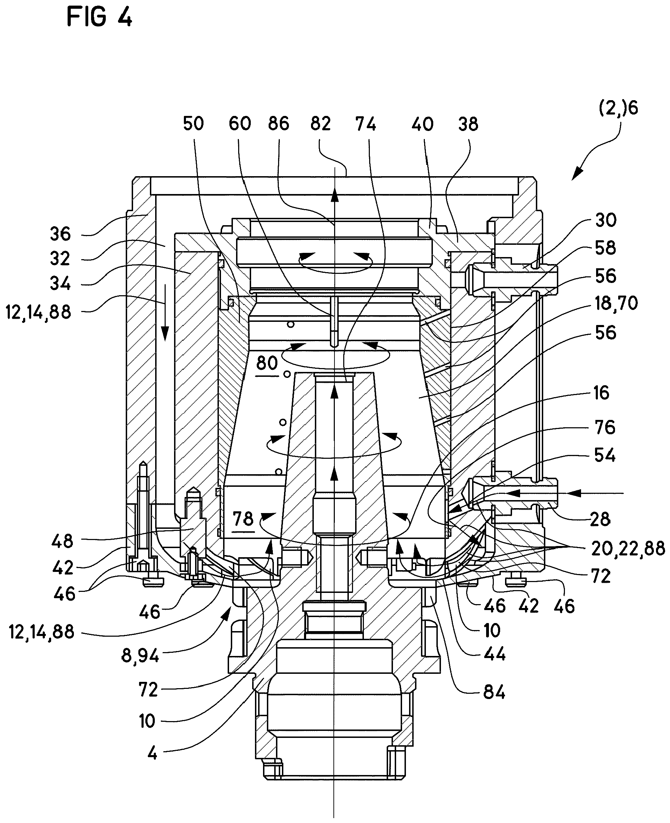

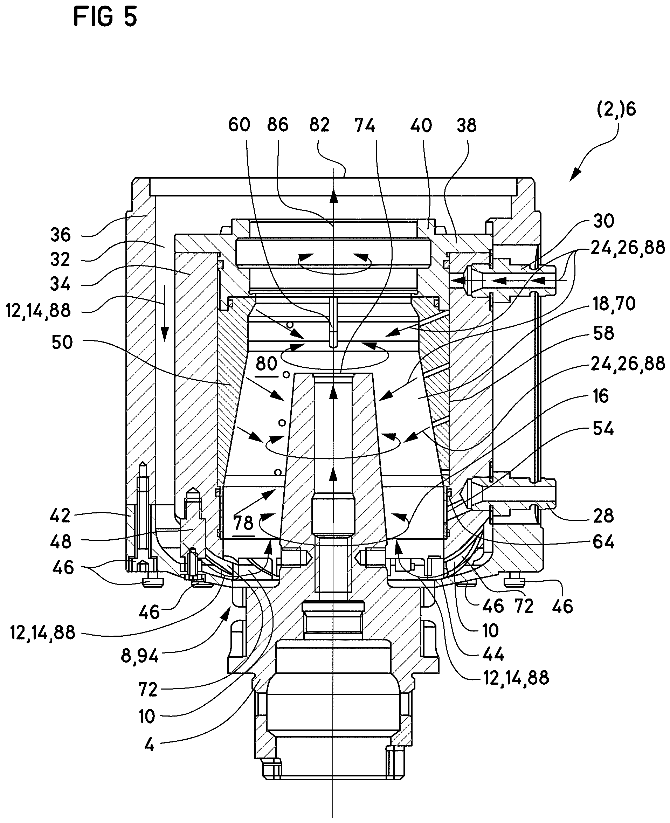

Die FIGen 2 und 3 verdeutlichen dabei diesbezüglich einen ersten Kühlungsprozess (inkl. Trocknungsprozess) mit zwei Phasen (FIG 2 (Phase 1) und FIG 3 (Phase 2)); die FIGen 4 und 5 verdeutlichen - bei baulich leicht modifizierter Vorrichtung 2 - einen alternativen zweiten Kühlungsprozess (inkl. Trocknungsprozess) mit ebenfalls zwei Phasen (FIG 4 (Phase 1) und FIG 5 (Phase 2)).

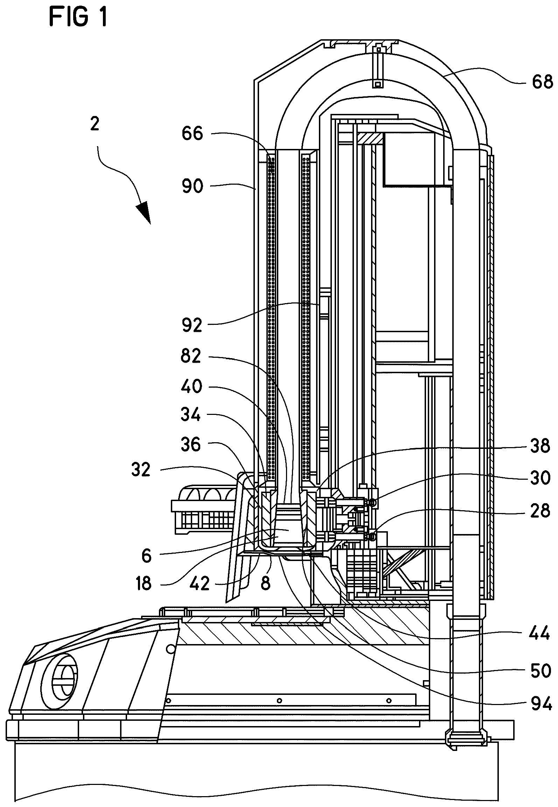

Die in FIG 1 dargestellte Vorrichtung 2 zur Kühlung und/oder Trocknung eines Schrumpffutters 4 enthält einen an einem Gestell 92 oder Ständer 92 (vertikal von oben nach unten bzw. vice versa) verschiebbar geführten und so von oben nach unten über den zu kühlenden Teil des Schrumpffutters 4 überstülpbaren Kühlaufsatz 6, ein mit dem Kühlaufsatz 6 verbundenes Ansaugrohr 66 (für von einem Inneren 18 des Kühlaufsatzes 6 abzusaugendes Kühlfluid 14, 22, 26) sowie eine mit dem Kühlaufsatz 6 verbundene, das Ansaugrohr 66 von außen konzentrisch umgebende Zuführung 90 (für dem Kühlaufsatz 6 zuzuführendes Kühlfluid 14).

D.h., der Kühlaufsatz 6 wird - zum Kühlen und/oder Trocknen des Schrumpffutters 4 - mit einer an seinem unteren Ende 8 befindlichen Überstülpöffnung 94 über das Schrumpffutter 4, genauer von dessen Werkzeugaufnahmeöffnung 74 nach unten, übergestülpt, wodurch das Schrumpffutter 4 von oben bzw. von seinem oberen Ende in das Innere 18 des Kühlaufsatzes 6 eintaucht und von diesem aufgenommen wird.

Das mit dem Kühlaufsatz 6 verbundene Ansaugrohr 66 ist über eine als Schlauch oder stabiles Rohr ausgebildete Ansaugleitung 68 mit einem hier nicht dargestellten Saugaggregat verbunden, wodurch Kühlfluid 14, 22, 26 aus dem Inneren 18 des Kühlaufsatzes 6 abgesaugt werden kann.

Vom Saugaggregat führt, wie in FIG 1 dargestellt, die wiederum mit dem Kühlaufsatz 6 verbundene Zuführung 90 - gegebenenfalls über eine Trockenvorrichtung und/oder Reinigungsvorrichtung (nicht dargestellt, beispielsweise entsprechend der DE 10 2012 002 596 A1 ausbildbar) - das aus dem Kühlaufsatz 6 abgesaugte Kühlfluid 14, 22, 26 wieder zurück zum Kühlaufsatz.

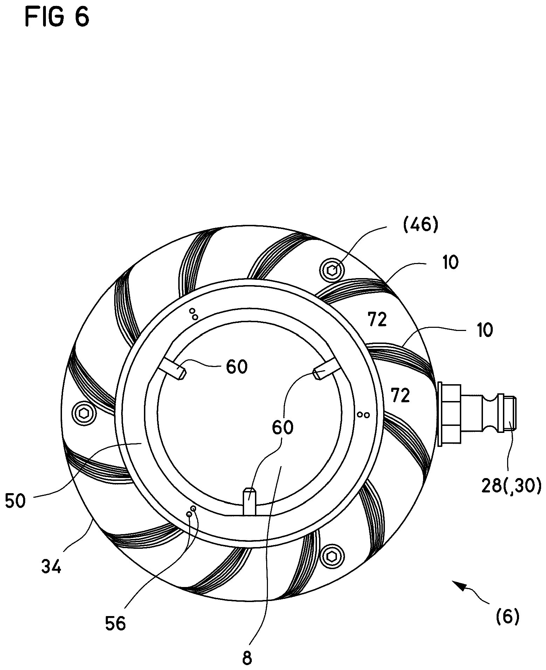

Der im Folgenden noch näher erläuterte Kühlaufsatz 6 (vgl. FIGen 2 bis 3 (erste Ausführung) und FIGen 4 und 5 (zweite Ausführung) sowie FIG 6) enthält die bereits erwähnte Überstülpöffnung 94 und das das Schrumpffutter 4 aufnehmende Innere 18, deren Innenkonturen so auf die Außenkontur des zu kühlenden Teils des Schrumpffutters 4 abgestimmt ist, dass beim Überstülpen des Kühlaufsatzes 6 über das Schrumpffutter 4 ein Spalt 70 im Inneren 18 des Kühlaufsatzes 6 hin zu der Außenfläche des Schrumpffutters 4 verbleibt.

Dabei sind die Innenkonturen der Überstülpöffnung 94 und des Inneren 18 des Kühlaufsatzes 6 so dimensioniert, dass ein großes Spektrum an Schrumpffuttern gekühlt werden kann, insbesondere was deren Durchmesser und Länge betrifft.

Über die an das Saugaggregat angeschlossene Ansaugleitung 68, das Ansaugrohr 66 und den Kühlaufsatz 6 kann so Kühlfluid 14 bzw. 14, 22 an einem unteren Ende 8 des Kühlaufsatzes 6 bzw. an der Überstülpöffnung 94 des Kühlaufsatzes 6 sowie im Inneren 18 des Kühlaufsatzes 6 an- bzw. abgesaugt werden - und so über den Spalt 70 an der Außenfläche des Schrumpffutters 4 zu dessen Kühlung entlang geleitet werden (vgl. FIGen 2 bis 5).

Wird dann das von dem Saugaggregat abgesaugte, gegebenenfalls getrocknete und/oder gereinigte, Kühlfluid 14, 22, 26 - über die entsprechende Zuführung 90 - wieder dem Kühlaufsatz 6 zugeführt, kann sich so ein effizienter, geschlossener Kühlkreislauf ausbilden.

### - Kühlaufsatz 6

Wie insbesondere die FIGen 2 bis 5 und FIG 6 zeigen weist der Kühlaufsatz 6 die folgenden wesentlichen baulichen Bestandteile auf:
- ein äußeres Gehäuse 36,
- ein in dem äußeren Gehäuse 36 angeordnetes inneres Gehäuse 34,
- mehrere an dem unteren Ende des inneren Gehäuse 34 einstückig angeformte Leitelemente 10 (in Form von gekrümmten Leitschaufeln 10),
- ein in dem inneren Gehäuse 34 aufgenommener Einsatz 50 mit ersten und zweiten düsenartigen Eintrittsöffnungen 52, 56 (vgl. FIGen 2 und 3 (erste Ausführung)) bzw. nur zweiten düsenartigen Eintrittsöffnungen 56 (vgl. FIGen 4 und 5 (zweite Ausführung)),
- ein am oberen Ende des inneren Gehäuses 34 angeordneter (oberer) Deckel 38 sowie
- ein am unteren Ende des äußeren Gehäuse 36 angeordneter und mit dem äußeren Gehäuse 36 unmittelbar sowie mittels Abstandshalter 48 beabstandet mit dem inneren Gehäuse 34 verschraubt 46 gehaltener (unterer) Deckel 42.

Wie die bezeichneten Figuren zeigen, ist das innere Gehäuse 34 derart in dem äußeren Gehäuse 36 aufgenommen, dass sich zwischen dem äußeren Gehäuse 36 und dem inneren Gehäuse 34 eine Ringkammer 32, in diesem Fall eine nicht vollständig umlaufende Ringkammer 32, für eine erste Kühlfluidströmung 12 aus einem ersten Kühlfluid 14, ausbildet.

Sind ferner, wie die bezeichneten Figuren auch zeigen, die Leitelemente/-schaufeln 10 einstückig am unteren Ende des inneren Gehäuses 34 des Kühlaufsatzes 6 angeordnet bzw. angeformt (vgl. hier insbesondere auch FIG 6), bilden sich so strömungsleitende Strömungsbereiche/-räume 72 zwischen den Leitelementen 10 - und beiderseits gedeckelt durch das innere Gehäuse 34 und den mit dem äußeren Gehäuse 36 verbundenen, d.h. hier verschraubten 46, (unteren) Deckel 42 - aus.

Durchströmt so die in der Ringkammer 32 strömende erste Kühlfluidströmung 12 bzw. das erste Kühlfluid 14 diese Strömungsbereiche/-räume 72 (am unteren Ende 8 des Kühlaufsatzes 6), wird sie bzw. es dort über die Leitelemente 10 bzw. Leitschaufeln 10 umgelenkt und strömt von dort unmittelbar - unter Ausbildung einer Wirbelströmung 16 - in das Innere 18 des Kühlaufsatzes 6.

FIG 1 zeigt dabei, dass die von dem Saugaggregat kommende Zuführung 90 am oberen Ende des äußeren Gehäuses 36 angeflanscht ist, so dass das abgesaugte, gegebenenfalls getrocknete und/oder gereinigte, Kühlfluid 14, 22, 26 - als die erste Kühlfluidströmung 12 bzw. das erste Kühlfluid 14 - in die Ringkammer 32 eintreten/-strömen kann.

FIG 1 zeigt auch, dass das zum Saugaggregat führende Ansaugrohr 66 an einem Flansch 40 am oberen Deckel 38 anflanschbar ist, so dass Kühlfluid 14, 22, 26 aus dem Inneren 18 des Kühlaufsatzes 6 abgesaugt werden kann.

Weiterhin zeigen die bezeichneten Figuren, wie der innere Einsatz 50 in dem inneren Gehäuse 34 angeordnet ist, wobei sich - wie gezeigt - zwischen dem Einsatz 50 und dem inneren Gehäuse 34 - gedeckelt durch den oberen Deckel 38 - ein erster (in diesem Fall vollständig umlaufend ausgebildeter) Ringraum 54 für eine zweite Kühlfluidströmung 20 aus einem zweiten Kühlfluid 22), und - oberhalb des ersten Ringraums 54 - ein zweiter (in diesem Fall vollständig umlaufend ausgebildeter) Ringraum 58 für eine dritte Kühlfluidströmung 24 aus einem dritten Kühlfluid 26 ausbilden.

Mittels - in den FIGen 2 bis 5 auch dargestellten - Dichtungen 64 sind der erste und der zweite Ringraum 54, 58 nach "Außen" - und auch gegeneinander abgedichtet.

Wie die FIGen 2 und 3 auch zeigen, sieht der Einsatz 50 (in seiner ersten Ausführung (kurz "erster Einsatz")) in seinem unteren Bereich 78 erste nach oben gerichtete, düsenartig ausgebildete Eintrittsöffnungen 52 für den Eintritt bzw. die Zuführung der zweiten Kühlfluidströmung 20 bzw. dem zweiten Kühlfluid 22 von dem ersten Ringraum 54 in das Innere 18 des Kühlaufsatzes 6 vor - sowie in seinem oberen Bereich 80 zweite nach unten gerichtete, düsenartig ausgebildete Eintrittsöffnungen 56 für den Eintritt bzw. die Zuführung der dritten Kühlfluidströmung 24 bzw. dem dritten Kühlfluid 26 von dem zweiten Ringraum 58 in das Innere 18 des Kühlaufsatzes 6.

Wie den bezeichneten Figuren zu entnehmen ist, sind die zweiten (nach unten gerichteten) Eintrittsöffnungen 56 umfangsseitig gleichverteilt (Teilung jeweils 120°) in verschiedenen, hier vier, axialen Höhen angeordnet. Für die ersten (nach oben gerichteten) Eintrittsöffnungen 52 ist nur eine axiale Höhe vorgesehen, in welche ebenfalls (drei) Eintrittsöffnungen 52 umfangsseitig gleichverteilt angeordnet sind.

So kann dadurch realisiert werden, dass das zweite Kühlfluid 22 aus dem ersten Ringraum 54 über diese ersten Eintrittsöffnungen 52 in das Innere 18 des Kühlaufsatzes 6 eintritt bzw. dass das dritte Kühlfluid 26 aus dem zweiten Ringraum 58 über diese zweiten Eintrittsöffnungen 56 in das Innere 18 des Kühlaufsatzes 6 eintritt.

Wie die FIGen 4 und 5 zeigen, sieht der Einsatz 50 (in seiner zweiten Ausführung (kurz "zweiter Einsatz")) in seinem oberen Bereich 80 auch hier die zweiten nach unten gerichteten Eintrittsöffnung/-en 56 für den Eintritt bzw. die Zuführung der dritten Kühlfluidströmung 24 bzw. dem dritten Kühlfluid 26 von dem zweiten Ringraum 58 in das Innere 18 des Kühlaufsatzes 6 vor.

Anstelle aber der ersten Eintrittsöffnungen 52 sieht dieser Einsatz 50 nach der zweiten Ausführung Bohrungen 76 im inneren Gehäuse 34 vor, welche den ersten Ringraum 54 fluidtechnisch mit den - zwischen den Leitelementen/-schaufeln 10 ausgebildeten - Strömungsräumen/-bereichen 72 verbinden.

So kann in diesem - zweiten - Fall realisiert werden, dass das zweite Kühlfluid 22 aus dem ersten Ringraum 54 über diese Bohrungen 76 zunächst in die Strömungsräume/-bereiche 72 eintritt, durch umgelenkt und - als Wirbelströmung 16 (wie schon die erste Kühlfluidströmung 12 bzw. das erste Kühlfluid 14) - in das Innere 18 des Kühlaufsatzes 6 eintritt. Gleich bei dieser zweiten Ausführung ist, dass das dritte Kühlfluid 26 - wie bei der ersten Ausführung - aus dem zweiten Ringraum 58 über die zweiten Eintrittsöffnungen 56 (direkt) in das Innere 18 des Kühlaufsatzes 6 eintreten kann.

D.h., bei dem hier vorgestellten Kühlaufsatz 6 - mit seinen zwei realisierten Einsätzen 50 - sind jeweils drei Kühlfluidströmungen 12, 20, 24 zur Kühlung und/oder Trocknung eines Schrumpffutters 4 realisierbar, nämlich jeweils die erste, die zweite und die dritte Kühlfluidströmung 12, 20, 24 aus dem ersten, dem zweiten bzw. dritten Kühlfluid 14, 22, 26.

Wie die FIGen 2 bis 5 auch zeigen, sieht der Kühlaufsatz 6 zwei Anschlüsse 28, 30 (inkl. jeweiliger Anschlussstutzen) (für das zweite 22 bzw. das dritte Kühlfluid 26) vor, über welche das zweite Kühlfluid 22 von außen dem ersten Ringraum 54 bzw. das dritte Kühlfluid 26 von außen dem zweiten Ringraum 58 zugeführt werden können.

Diese zwei Anschlüsse 28, 30 sind im Bereich dieses Teils des äußeren Gehäuses 36 angeordnet, in welchem die Ringkammer 32 nicht umlaufend ist, führen hier durch das äußere Gehäuse 36 durch und durchstoßen das innere Gehäuse 34 (im Bereich des ersten 54 bzw. zweiten Ringraums 58).

Ferner zeigen die FIGen 2 bis 5 auch, dass im Bereich des unteren Endes 8 des Kühlaufsatzes 6 - einstückig angeformt an dem unteren Deckel 42 des Kühlaufsatzes 6 und die Überstülpöffnung 94 des Kühlaufsatzes 6 ausbildend - ein Dichtelement 44, hier eine Dichtlippe 44 (mit einem (nicht gezeigten Dichtlappen)), zur dichtenden Anlage an dem Schrumpffutter 4 angeordnet ist.

Wird der Kühlaufsatz 6 - bei Kühlung des Schrumpffutters 4 - insbesondere dann mittels des Dichtelements 44 vollständig auf das Schrumpffutter 4 aufgesetzt, wird ein sonst vorhandener, nach außen hin offener Spalt zwischen dem unteren Ende 8 des Kühlaufsatzes 6 und dem Schrumpffutter 4 abgedichtet - und es kann kein Kühlfluid (unkontrolliert und mit damit verbundener hohen Geräuschentwicklung) über einen solchen Spalt von außen zwischen dem unteren Ende 8 des Kühlaufsatzes 6 und dem Schrumpffutter 4 in das Innere 18 des Kühlaufsatzes 6 eintreten.

Wie weiter die FIGen 2 bis 6 zeigen, sieht der Kühlaufsatz 6 - in diesem Fall drei - Anschlagselemente 60 - angeordnet an dem Einsatz 50 - im Inneren 18 des Kühlaufsatzes 6 vor, welche an dem Schrumpffutter 4 anschlagbar sind.

Mittels dieser Anschlagselemente 60 kann eine Überstülptiefe bei zu kühlenden Schrumpffutter 4 eingestellt werden bzw. verhindert werden, dass - im Falle schmaler und/oder langer zu kühlender Schrumpffutter 4 - der über ein solches Schrumpffutter 4 übergestülpte Kühlaufsatz 6 - mangels einer erreichbaren Auflage am Schrumpffutter 4, beispielsweise ein Bund 84 des Schrumpffutters 4, - unkontrolliert und/oder zu weit über das zu kühlende Schrumpffutter 4 übergestülpt würde.

### - Kühl- und Trockenprozess (mit erstem Einsatz 50) - Variante 1

Die FIGen 2 und 3 verdeutlichen - insbesondere mit dort Strömungsrichtungen 88 verdeutlichenden dargestellten Pfeilen 88 - einen ersten zweiphasigen Kühlungs- und Trocknungsprozess bei einem Schrumpffutter 4. Dieser erste Kühlungs- und Trocknungsprozess sieht die Vorrichtung 2 mit dem ersten Einsatz 50 vor.

In der in FIG 2 näher verdeutlichten ersten Phase dieses Prozesses tritt die erste Kühlfluidströmung 12 bzw. das erste Kühlfluid 14, in diesem Fall eine/die sich in dem geschlossenen Prozess befindende gegebenenfalls getrocknete und/oder gereinigte (Blas-)Luft 14, aus der Ringkammer 32 - über die Leitelemente 10 am unteren Ende 8 des Kühlaufsatzes 6 bzw. dortige Strömungsräume/-bereiche 72 - unter Ausbildung der Wirbelströmung 16 - in das Innere 18 des Kühlaufsatzes 6 ein und umströmt (bewirkt durch die Absaugung) auf einer spiralförmigen Bahn bzw. mit schraubenförmig wirbelnder Bewegung (88) - nach oben abgesaugt das Schrumpffutter 4.

Gleichzeitig tritt - über ihren entsprechenden Anschluss 28 den ersten Ringraum 54 zugeführt - die zweite Kühlfluidströmung 20 bzw. das zweite Kühlfluid 22, in diesem Fall ein unter Druck stehendes Wasser-Luft-Gemisch 22, über die nach oben gerichteten ersten Eintrittsöffnungen 52 in das Innere des Kühlaufsatzes 6 ein (88).

Die Anströmung an das Schrumpffutter 4 mit dem zweiten Kühlfluid 22 bzw. der zweiten Kühlfluidströmung 20 erfolgt so zunächst durch eine schräg nach oben gerichtete laminare Strömung (88), welche sich dann im weiteren Verlauf mit der ersten Kühlfluidströmung 12 vermischt bzw. durch die Wirbelströmung 16 des ersten Kühlfluids 14 mitgerissen wird.

Über die Absaugung durch das Saugaggregat verlassen die zwei vermischten Kühlfluidströmungen 12, 20 bzw. Kühlfluide 14, 22 das Innere 18 des Kühlaufsatzes 6 - an dessen oberen Ende 82 durch das Ansaugrohr 66.

Über das Saugaggregat und über die Zuführung 90 tritt diese Strömung (88) - ggfls. getrocknet und/oder gereinigt - als erste Kühlfluidströmung 12 wieder in die Ringkammer 32 ein, wodurch sich so der Kreislauf schließt.

Ist ein vorgebbarer Kühlgrad bei dem Schrumpffutter erreicht, so wird die erste Phase des Prozesses beendet, dadurch, dass in der jetzt beginnenden, in FIG 3 verdeutlichten, zweiten Prozessphase anstelle des Wasser-Luft-Gemisches 22 (Blas- )Luft 22 (ggfls. auch unter Druck) als das zweite Kühlfluid 22 bzw. als die zweite Kühlfluidströmung 20 über die nach oben gerichteten ersten Eintrittsöffnungen 52 eingeleitet wird.

D.h. wird nach der ersten Phase das - effektiv und effizient kühlende - Wasser-Luft-Gemisch abgeschaltet und durch (Blas- )Luft ersetzt, so können durch solche (Blas-)Luft eventuell noch vorhandene Flüssigkeitsreste am Schrumpffutter abgeblasen werden - was die Trockenleistung in der zweiten Phase erhöht.

Gleichzeitig tritt jetzt in dieser zweiten Phase - über ihren entsprechenden Anschluss 30 den zweiten Ringraum 58 zugeführt - auch die dritte Kühlfluidströmung 24 bzw. das dritte Kühlfluid 26, in diesem Fall auch (Blas-)Luft 26 (ggfls. auch unter Druck), über die nach unten gerichteten zweiten Eintrittsöffnungen 56 in das Innere 18 des Kühlaufsatzes 6 ein.

Auch in dieser zweiten Phase erfolgt die Anströmung (88) des Schrumpffutters 4 mit der ersten Kühlfluidströmung 12, auch in diesem Fall wieder aus der sich in dem geschlossenen Prozess befindenden gegebenenfalls getrockneten und/oder gereinigten (Blas-)Luft 14.

D.h. aus der Ringkammer 32 - über die Leitelemente 10 am unteren Ende 8 des Kühlaufsatzes 6 bzw. dortige Strömungsräume/-bereiche 72 um- und abgelenkt und unter Ausbildung der Wirbelströmung 18 - strömt die erste Kühlfluidströmung 12 bzw. das erste Kühlfluid 14 in der Wirbelströmung 18 in das Innere 18 des Kühlaufsatzes 6 ein, wo sie bzw. es dann auf der spiralförmigen Bahn bzw. mit schraubenförmig wirbelnder Bewegung (88) nach oben abgesaugt wird.

Erfolgt die Anströmung an das Schrumpffutter mit dem zweiten Kühlfluid 22 bzw. der zweiten Kühlfluidströmung 20 so zunächst durch eine schräg nach oben gerichtete laminare Strömung (88) bzw. die Anströmung an das Schrumpffutter 4 mit dem dritten Kühlfluid 26 bzw. der dritten Kühlfluidströmung 24 so zunächst durch eine schräg nach unten gerichtete laminare Strömung (88), so vermischen sich die zweite 20 und dritte Kühlfluidströmung 24 dann im weiteren Verlauf mit der ersten Kühlfluidströmung 12 bzw. werden durch die Wirbelströmung 18 des ersten Kühlfluids 14 mitgerissen.

Über die Absaugung durch das Saugaggregat verlassen die drei vermischten Kühlfluidströmungen 12, 20, 24 bzw. Kühlfluide 14, 22, 26 das Innere 18 des Kühlaufsatzes 6 - an dessen oberen Ende 82 durch das Ansaugrohr 66.

Über das Saugaggregat und über die Zuführung 90 tritt diese Strömung - ggfls. getrocknet und/oder gereinigt - als die erste Kühlfluidströmung wieder in die Ringkammer 32 ein, wodurch sich so der Kreislauf schließt.

### - Kühl- und Trockenprozess (mit zweitem Einsatz 50) - Variante 2

Die FIGen 4 und 5 verdeutlichen - insbesondere mit dort Strömungsrichtungen 88 verdeutlichenden dargestellten Pfeilen 88 - einen ersten zweiphasigen Kühlungs- und Trocknungsprozess bei einem Schrumpffutter 4. Dieser zweite Kühlungs- und Trocknungsprozess sieht die Vorrichtung 2 mit dem zweiten Einsatz 50 vor.

In der in FIG 4 näher verdeutlichten ersten Phase dieses Prozesses tritt auch hier die erste Kühlfluidströmung 12 bzw. das erste Kühlfluid 14, in diesem Fall die sich in dem geschlossenen Prozess befindende gegebenenfalls getrocknete und/oder gereinigte (Blas-)Luft 14, aus der Ringkammer 32 - über die Leitelemente 10 am unteren Ende 8 des Kühlaufsatzes 6 bzw. dortige Strömungsräume/-bereiche 10 - unter Ausbildung der Wirbelströmung 16 - in das Innere 18 des Kühlaufsatzes 6 ein und umströmt (bewirkt durch die Absaugung) auf einer spiralförmigen Bahn bzw. mit schraubenförmig wirbelnder Bewegung (88) - nach oben abgesaugt das Schrumpffutter 4.

Gleichzeitig tritt - über ihren entsprechenden Anschluss 28 den ersten Ringraum 54 zugeführt und weiter über die Bohrungen 76 im inneren Gehäuse 34 weitergeführt - die zweite Kühlfluidströmung 20 bzw. das zweite Kühlfluid 22, in diesem Fall ebenfalls das unter Druck stehende Wasser-Luft-Gemisch 22, über die Strömungsräume/-bereiche 72 in das Innere 18 des Kühlaufsatzes 6 ein.

In diesem Fall vermischen sich die erste Kühlfluidströmung 12 und die zweite Kühlfluidströmung 20 bzw. das erste Kühlfluid 12 und das zweite Kühlfluid 22 bereits im Bereich der Strömungsräume/-bereiche 72, wodurch auch das zweite Kühlfluid 22 (vermischt mit dem ersten Kühlfluid 14) - unter Ausbildung der Wirbelströmung 16 - in das Innere 18 des Kühlaufsatzes 6 einströmt - und weiter dort das Schrumpffutter 4 (bewirkt durch die Absaugung) auf einer spiralförmigen Bahn bzw. mit schraubenförmig wirbelnder Bewegung (88) umströmen.

Über die Absaugung durch das Saugaggregat verlassen die zwei vermischten Kühlfluidströmungen 12, 20 bzw. Kühlfluide 14, 22 das Innere 18 des Kühlaufsatzes 6 - an dessen oberen Ende 82 durch das Ansaugrohr 66.

Über das Saugaggregat und über die Zuführung 90 tritt diese Strömung - ggfls. getrocknet und/oder gereinigt - als erste Kühlfluidströmung 12 wieder in die Ringkammer 32 ein, wodurch sich so der Kreislauf schließt.

Ist ein vorgebbarer Kühlgrad bei dem Schrumpffutter 4 erreicht, so wird die erste Phase des Prozesses beendet, dadurch, dass in der jetzt beginnenden, in FIG 5 verdeutlichten, zweiten Prozessphase - über ihren entsprechenden Anschluss 30 den zweiten Ringraum 58 zugeführt - die dritte Kühlfluidströmung 24 bzw. das dritte Kühlfluid 26, in diesem Fall auch (Blas-)Luft 26 (ggfls. auch unter Druck), über die nach unten gerichteten zweiten Eintrittsöffnungen 56 in das Innere 18 des Kühlaufsatzes 6 eintritt.

D.h. wird nach der ersten Phase das - effektiv und effizient kühlende - Wasser-Luft-Gemisch des zweiten Kühlfluids 22 (gänzlich) abgeschaltet und durch (Blas-)Luft des dritten Kühlfluids 26 ersetzt, so können durch solche (Blas-)Luft eventuell noch vorhandene Flüssigkeitsreste am Schrumpffutter abgeblasen werden - was die Trockenleistung in der zweiten Phase erhöht.

Auch in dieser zweiten Phase erfolgt die Anströmung des Schrumpffutters 4 mit der ersten Kühlfluidströmung 24 bzw. dem ersten Kühlfluid 14, auch in diesem Fall wieder aus der sich in dem geschlossenen Prozess befindenden gegebenenfalls getrockneten und/oder gereinigten (Blas-)Luft 14.

D.h. aus der Ringkammer 32 - über die Leitelemente 10 am unteren Ende 8 des Kühlaufsatzes 6 bzw. dortige Strömungsräume/-bereiche 72 um- und abgelenkt und unter Ausbildung der Wirbelströmung 16 - strömt die erste Kühlfluidströmung 12 bzw. das erste Kühlfluid 14 in der Wirbelströmung 16 in das Innere 18 des Kühlaufsatzes 6 ein, wo sie bzw. es dann auf der spiralförmigen Bahn bzw. mit schraubenförmig wirbelnder Bewegung (88) nach oben abgesaugt wird.

Erfolgt die Anströmung an das Schrumpffutter 4 mit dem dritten Kühlfluid 26 bzw. der dritten Kühlfluidströmung 24 so zunächst durch eine schräg nach unten gerichtete laminare Strömung , so vermischt sich die dritte Kühlfluidströmung 24 dann im weiteren Verlauf mit der ersten Kühlfluidströmung 12 bzw. werden durch die Wirbelströmung 16 des ersten Kühlfluids 14 mitgerissen.

Über die Absaugung durch das Saugaggregat verlassen die zwei vermischten Kühlfluidströmungen 12, 24 bzw. Kühlfluide 14, 26 das Innere 18 des Kühlaufsatzes 6 - an dessen oberen Ende 82 durch das Ansaugrohr 66.

Über das Saugaggregat und über die Zuführung 90 tritt diese Strömung - ggfls. getrocknet und/oder gereinigt - als die erste Kühlfluidströmung 12 wieder in die Ringkammer 32 ein, wodurch sich so der Kreislauf schließt.

Angedeutet in den bezeichneten Figuren ist auch, dass bei den beschriebenen Prozessen auch jeweils Außenluft durch das Innere des Schrumpffutters 4 hindurch angesaugt werden kann bzw. wird (88), welche so - durch das Schrumpffutter 4 hindurch - an dessen Werkzeugaufnahmeöffnung 74 in das Innere 18 des Kühlaufsatzes 6 eintritt - sich dort mit den anderen Kühlfluidströmungen 12, 20, 24 vermischt - und zusammen mit diesen mittels des Saugaggregats aus dem Inneren 18 des Kühlaufsatzes 6 abgesaugt wird.

Unbenommen Obigem kann auch der Kühlungs- und Trocknungsprozess als bloßer Trocknungsprozess durchgeführt werden, wobei hier dann alle das Schrumpffutter anströmenden Kühlfluide "reine" (Blas-)Luft bzw. im Allgemeinen trockene, flüssigkeitsfreie Fluide sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Vorrichtung zum Kühlen und/oder Trocknen eines Schrumpffutters (4)
- 4: Schrumpffutter, Werkzeughalter
- 6: (überstülpbarer) Kühlaufsatz
- 8: unteres Ende des Kühlaufsatzes (6)
- 10: Leitelement, Leitschaufel (einstückig angeformt am inneren Gehäuse)

- 12: erste Kühlfluidströmung
- 14: erstes Kühlfluid
- 16: Wirbelströmung
- 18: Inneres des Kühlaufsatzes (6)
- 20: zweite Kühlfluidströmung

- 22: zweites Kühlfluid
- 24: dritte Kühlfluidströmung
- 26: drittes Kühlfluid
- 28: erster Anschluss/-stutzen (für zweites Kühlfluid)
- 30: zweiter Anschluss/-stutzen (für drittes Kühlfluid)

- 32: Ringkammer (zwischen innerem und äußerem Gehäuse für erstes Kühlfluid/erste Kühlfluidströmung)
- 34: inneres Gehäuse
- 36: äußeres Gehäuse
- 38: oberer Deckel (für/am inneren Gehäuse)
- 40: Flansch (an oberem Deckel für Ansaugrohr)

- 42: unterer Deckel (für/am äußeren Gehäuse)
- 44: Dichtelement, Dichtlippe, Dichtlappen
- 46: Schraube, Verschraubung
- 48: Abstandshalter
- 50: Einsatz (mit (ersten/zweiten) Eintrittsöffnungen)
- 52: erste (nach oben gerichtete) Eintrittsöffnung/-en
- 54: erster (unterer) Ringraum (für zweites Kühlfluid/zweite Kühlfluidströmung)
- 56: zweite (nach unten gerichtete) Eintrittsöffnung/-en
- 58: zweiter (oberer) Ringraum (für drittes Kühlfluid/dritte Kühlfluidströmung)
- 60: Anschlagselement/-e
- 64: Dichtung (für die Ringräume)
- 66: Ansaugrohr
- 68: Ansaugleitung

- 70: Spalt
- 72: (sich zwischen zwei Leitelementen/-schaufeln ausbildender) Strömungsraum (Umlenkung und Erzeugung der Wirbelströmung)
- 74: Werkzeugaufnahmeöffnung (des Werkzeughalters/Schrumpffutters)
- 76: Bohrung (im inneren Gehäuse 34)
- 78: unterer Bereich (vom Einsatz 50)

- 80: oberer Bereich (vom Einsatz 50)
- 82: oberes Ende (des Kühlaufsatzes (6))
- 84: Bund (am Schrumpffutter/Werkzeughalter 4)
- 86: Längsachse (des Einsatzes (50))
- 88: Strömungsrichtung/-spfeil

- 90: Zuführung/-rohr
- 92: Gestell, Ständer
- 94: Überstülpöffnung

## Patentansprüche

1. **Vorrichtung** (2) zum Kühlen und/oder Trocknen eines Schrumpffutters (4) mit einem mit seinem unteren Ende (8) über das Schrumpffutter (4) überstülpbaren Kühlaufsatz (6),
**dadurch gekennzeichnet, dass**
im Bereich des unteren Endes (8) des Kühlaufsatzes (6) Leitelemente (10), insbesondere Leitschaufeln (10), angeordnet sind, welche derart ausgebildet sind, dass eine erste Kühlfluidströmung (12) unter Erzeugung einer durch die Leitelemente (10) bewirkbaren Wirbelströmung (16) in ein das Schrumpffutter (6) aufnehmbares Inneres (18) des Kühlaufsatzes (6) leitbar ist.

2. Vorrichtung (2) zum Kühlen und/oder Trocknen eines Schrumpffutters (4) nach mindestens einem der voranstehenden Ansprüche,
**dadurch gekennzeichnet, dass**
der Kühlaufsatz (6) ein äußeres Gehäuse (36) und ein in dem äußeren Gehäuse (36) angeordnetes inneres Gehäuse (34) aufweist, wobei zwischen dem äußeren Gehäuse (36) und dem inneren Gehäuse (34) eine Ringkammer (32), insbesondere eine nicht vollständig umlaufende Ringkammer (32), insbesondere für die erste Kühlfluidströmung (12), ausgebildet ist.

3. Vorrichtung (2) zum Kühlen und/oder Trocknen eines Schrumpffutters (4) nach mindestens einem der voranstehenden Ansprüche,
**dadurch gekennzeichnet, dass**
der Kühlaufsatz (6) einen in dem inneren Gehäuse (34) angeordneten Einsatz (50) aufweist, insbesondere wobei zwischen dem Einsatz (50) und dem inneren Gehäuse (34) ein erster Ringraum (54), insbesondere für eine zweite Kühlfluidströmung (20), und/oder zweiter Ringraum (58), insbesondere für eine dritte Kühlfluidströmung (24), ausgebildet sind/ist.

4. Vorrichtung (2) zum Kühlen und/oder Trocknen eines Schrumpffutters (4) nach dem voranstehenden Anspruch,
**dadurch gekennzeichnet, dass**
der Einsatz (50), insbesondere in seinem unteren Bereich (78), erste nach oben gerichtete Eintrittsöffnung/-en (52) für eine zweite Kühlfluidströmung (20) und/oder, insbesondere in seinem oberen Bereich (80), zweite nach unten gerichtete Eintrittsöffnung/-en (56) für eine dritte Kühlfluidströmung (24) aufweist.

5. Vorrichtung (2) zum Kühlen und/oder Trocknen eines Schrumpffutters (4) nach mindestens einem der voranstehenden Ansprüche,
**dadurch gekennzeichnet, dass**
an einem oberen Ende (82) des Kühlaufsatzes (6), insbesondere an einem inneren Gehäuse (34) des Kühlaufsatzes (6), ein Ansaugrohr (66) und/oder eine Ansaugleitung (68) angeordnet ist.

6. Vorrichtung (2) zum Kühlen und/oder Trocknen eines Schrumpffutters (4) nach mindestens einem der voranstehenden Ansprüche,
**dadurch gekennzeichnet, dass**
die Leitelemente (10) einstückig an einem inneren Gehäuse (34) des Kühlaufsatzes (6) angeformt sind.

7. Vorrichtung (2) zum Kühlen und/oder Trocknen eines Schrumpffutters (4) nach mindestens einem der voranstehenden Ansprüche
**dadurch gekennzeichnet, dass**
im Bereich des unteren Endes (8) des Kühlaufsatzes (6) ein Dichtelement (44), insbesondere eine Dichtlippe (44) und/oder ein Dichtlappen, zur dichtenden Anlage an dem Schrumpffutter (4) angeordnet ist.

8. Vorrichtung (2) zum Kühlen und/oder Trocknen eines Schrumpffutters (4) nach mindestens einem der voranstehenden Ansprüche,
**dadurch gekennzeichnet, dass**
in einem inneren Gehäuse (34) des Kühlaufsatzes (6) Bohrungen (76) angeordnet sind, welche insbesondere einen ersten Ringraum (54) mit einem Strömungsraum (84) im Bereich der Leitelemente (10), insbesondere zwischen den Leitelementen (10) und/oder in einer Strömungsrichtung vor den Leitelementen (10), fluidtechnisch verbinden.

9. Vorrichtung (2) zum Kühlen und/oder Trocknen eines Schrumpffutters (4) nach mindestens einem der voranstehenden Ansprüche,
**dadurch gekennzeichnet, dass**
der Kühlaufsatz (6) eine oder mehrere Zuführungen (88) aufweist, durch welche ein Kühlfluid (14, 22, 26) in einen Strömungsraum (84) im Bereich der Leitelemente (10), insbesondere zwischen den Leitelementen (10) und/oder in einer Strömungsrichtung vor den Leitelementen (10) zuführbar ist.

10. Vorrichtung (2) zum Kühlen und/oder Trocknen eines Schrumpffutters (4) nach mindestens einem der voranstehenden Ansprüche
**dadurch gekennzeichnet, dass**
an dem Kühlaufsatz (6) Anschlagselemente (60) angeordnet sind, welche an dem Schrumpffutter (4) anschlagbar sind.

11. Vorrichtung (2) zum Kühlen und/oder Trocknen eines Schrumpffutters (4) nach mindestens einem der voranstehenden Ansprüche
**dadurch gekennzeichnet, dass**
der Kühlaufsatz (6) einen, insbesondere in einem inneren Gehäuse (34) des Kühlaufsatzes (6) angeordneten, Einsatz (50) aufweist, wobei der Einsatz (50) um seine Längsachse (86) drehbar im Kühlaufsatz (6) bzw. dem inneren Gehäuse (34) angeordnet ist, insbesondere dass der Einsatz (50), insbesondere in seinem unteren Bereich (78), erste nach oben gerichtete Eintrittsöffnung/-en (52) für eine zweite Kühlfluidströmung (20) und/oder, insbesondere in seinem oberen Bereich (80), zweite nach unten gerichtete Eintrittsöffnung/-en (56) für eine dritte Kühlfluidströmung (24) aufweist.

12. Verfahren zum Kühlen und/oder Trocknen eines Werkzeughalters (4), insbesondere eines Schrumpffutters (4), insbesondere mittels einer Vorrichtung (2) nach einem der voranstehenden Ansprüche,
**dadurch gekennzeichnet, dass**
der Werkzeughalter (4) durch eine erste Kühlfluidströmung (12) aus einem ersten Kühlfluid (14) gekühlt und/oder getrocknet wird, wobei die erste Kühlfluidströmung (12) in Form einer Wirbelströmung (16) axial in Richtung einer Werkzeugaufnahmeöffnung (74) des Werkzeughalters (4) entlang des Werkzeughalters (4) strömt.

13. Verfahren zum Kühlen und/oder Trocknen eines Werkzeughalters (4) nach mindestens einem der voranstehenden Verfahrensansprüche,
**dadurch gekennzeichnet, dass**
der Werkzeughalter (4) durch eine zweite Kühlfluidströmung (20) aus einem zweiten Kühlfluid (22) gekühlt und/oder getrocknet wird, wobei der Werkzeughalter (4) durch die zweite Kühlfluidströmung (20) in Form einer nach oben gerichteten Strömung (20) angeblasen wird oder dass auch die zweite Kühlfluidströmung (20) in Form der Wirbelströmung (16) axial in Richtung der Werkzeugaufnahmeöffnung (74) des Werkzeughalters (4) entlang des Werkzeughalters (4) strömt.

14. Verfahren zum Kühlen und/oder Trocknen eines Werkzeughalters (4) nach mindestens einem der voranstehenden Verfahrensansprüche,
**dadurch gekennzeichnet, dass**
der Werkzeughalter (4) durch eine dritte Kühlfluidströmung (24) aus einem dritten Kühlfluid (26) gekühlt und/oder getrocknet wird, wobei der Werkzeughalter (4) durch die dritte Kühlfluidströmung (24) in Form einer nach unten gerichteten Strömung (24) angeblasen wird.

15. Verfahren zum Kühlen und/oder Trocknen eines Werkzeughalters (4) nach mindestens einem der voranstehenden Verfahrensansprüche,
**dadurch gekennzeichnet, dass**
ein erstes, zweites und/oder drittes Kühlfluid (14, 22, 26) einer ersten, zweiten und/oder dritten Kühlfluidströmung Luft oder ein Gas oder ein Wasser-Luft-Gemisch oder ein Luft-Gas-Gemisch sind/ist, insbesondere dass das erste Kühlfluid (14) der ersten Kühlfluidströmung (12) Luft, insbesondere getrocknete Luft, ist und/oder dass das zweite Kühlfluid (22) der zweiten Kühlfluidströmung (20) ein Wasser-Luft-Gemisch oder Luft ist und/oder dass das dritte Kühlfluid (26) der dritten Kühlfluidströmung (24) Luft ist.

16. Verfahren zum Kühlen und/oder Trocknen eines Werkzeughalters (4) nach mindestens einem der voranstehenden Verfahrensansprüche,
**dadurch gekennzeichnet, dass**
der Werkzeughalter (4) in mehreren Phasen gekühlt und/oder getrocknet wird, insbesondere dass in einer ersten Phase des Kühlens und/oder Trocknens des Werkzeughalters (4) dieser mittels der ersten Kühlfluidströmung (12) und einer zweiten Kühlfluidströmung (20) gekühlt und/oder getrocknet wird und dass in einer zweiten Phase des Kühlens und/oder Trocknens des Werkzeughalters (4) dieser zumindest mittels der ersten Kühlfluidströmung (12) und einer dritten Kühlfluidströmung (24) gekühlt und/oder getrocknet wird.

17. Verfahren zum Kühlen und/oder Trocknen eines Werkzeughalters (4) nach dem voranstehenden Verfahrensanspruch,
**dadurch gekennzeichnet, dass**
in der zweiten Phase des Kühlens des Werkzeughalters (4) dieser auch mittels einer zweiten Kühlfluidströmung (20) gekühlt und/oder getrocknet wird.

18. Verfahren zum Kühlen und/oder Trocknen eines Werkzeughalters (4) nach mindestens einem der voranstehenden Verfahrensansprüche,
**dadurch gekennzeichnet, dass**
die erste Kühlfluidströmung (12) und eine zweite Kühlfluidströmung (20) vor Anströmung des Werkzeughalters gemischt und/oder zusammengeführt werden.

19. Verfahren zum Kühlen und/oder Trocknen eines Werkzeughalters (4) nach Anspruch 16,
**dadurch gekennzeichnet, dass**
das zweite Kühlfluid (22) der zweiten Kühlfluidströmung (24) in der ersten Phase ein Wasser-Luftgemisch ist und dass das zweite Kühlfluid (22) der zweiten Kühlfluidströmung (24) in der zweiten Phase Luft ist.

20. Verfahren zum Kühlen und/oder Trocknen eines Werkzeughalters (4) nach mindestens einem der voranstehenden Verfahrensansprüche,
**dadurch gekennzeichnet, dass**
zumindest eine von den Kühlfluidströmungen (12, 20, 24) dem Werkzeughalter (4) unter Druck zugeführt wird, insbesondere, dass eine zweite Kühlfluidströmung (20) zumindest im Falle eines Wasser-Luft-Gemisches dem Werkzeughalter (4) unter Druck zugeführt wird.

21. Verfahren zum Kühlen und/oder Trocknen eines Werkzeughalters (4) nach mindestens einem der voranstehenden Verfahrensansprüche,
**dadurch gekennzeichnet, dass**
die den Werkzeughalter (4) kühlende und/oder trocknende erste Kühlfluidströmung (12) abgesaugt wird bzw. die den Werkzeughalter (4) kühlenden und/oder trocknende Fluidströmungen (12, 20, 24) abgesaugt, insbesondere mittels eines Absaugaggregats (70), werden.

22. Verfahren zum Kühlen und/oder Trocknen eines Werkzeughalters (4) nach dem voranstehenden Verfahrensanspruch,
**dadurch gekennzeichnet, dass**
die abgesaugte erste Kühlfluidströmung (12) bzw. die abgesaugten Kühlfluidströmungen (12, 20, 24) getrocknet werden und die getrocknete Kühlfluidströmung bzw. -en dem Kühlungsprozess des Werkzeughalters (4) wieder als erste Kühlfluidströmung (12) zugeführt wird bzw. werden.

23. Verfahren zum Kühlen und/oder Trocknen eines Werkzeughalters (4) nach mindestens einem der voranstehenden Verfahrensansprüche,
**dadurch gekennzeichnet, dass**
auch eine zweite Kühlfluidströmung (20) und/oder eine dritte Kühlfluidströmung (24) in eine Wirbelströmung (16) versetzt werden bzw. wird.
